# EUROPÄISCHE PATENTSCHRIFT

(11) **EP 0 359 932 B1**
(45) Veröffentlichungstag und Bekanntmachung des Hinweises auf die Patenterteilung: **08.12.1993**
(21) Anmeldenummer: 89113124.5
(22) Anmeldetag: 18.07.1989
(51) Int. Cl.: F02F 3/22, F02F 3/00

(54) **Ölgekühlter Kolben für Verbrennungsmotoren**
Oil-cooled pistons for internal-combustion engines
Piston refroidi par huile pour moteurs à combustion interne

(30) Priorität: 21.09.1988 DE 3832022
(43) Veröffentlichungstag der Anmeldung: 28.03.1990
(73) Patentinhaber: MAHLE GMBH, D-70376 Stuttgart (DE)
(72) Erfinder: Jüngling, Kurt, D-7302 Ostfildern 2 (DE)

(56) Entgegenhaltungen:
- EP-A- 0 019 323
- BE-A- 656 758
- DE-A- 3 707 462
- DE-C- 947 840
- FR-A- 2 582 351

## Beschreibung

Die Erfindung betrifft einen Kolben für Verbrennungsmotoren nach dem Oberbegriff des Anspruchs 1.

Ein solcher Kolben ist aus dem JP-U 59 165908, der DE-AS 10 06 669 und der DE-OS 35 02 644 bekannt.

Zur Kühlung eines derartigen gebauten Kolbens ist zwischen dem Kolbenober- und Kolbenunterteil einerseits ein innerer und andererseits ein äußerer Kühlraum vorgesehen, die über entsprechende Überleitbohrungen miteinander verbunden sind.

Eine derartige Ausführung hat jedoch den Nachteil, daß bei Betrieb des Verbrennungsmotors die im inneren Kühlraum des Kolbens sich nur axial auf- und abbewegende (Shaker-) Kühlölmenge häufig zur erforderlichen Kühlung nicht ausreicht.

Der vorliegenden Erfindung liegt daher die Aufgabe zugrunde, den Kolben im Bereich des inneren Kühlraumes so auszubilden, daß ein verbesserter Kühleffekt im inneren Kühlraum, insbesondere bezogen auf den zu kühlenden Bereich im inneren Abschnitt des Kolbenoberteils, durch eine Zirkulationsbewegung des Kühlöls erreicht wird.

Eine solche Lösung zeigt die Lehre nach dem kennzeichnenden Teil des Anspruchs 1.

Durch spezielle Ausbildung des inneren Kolbenbodenbereichs des Kolbenoberteiles im Bereich der Kolbenachse als zum oberen Ringkanal hin weisende konkave Wand, wird das vom äußeren ringförmigen Kühlraum über die Überleitbohrungen nach innen zugeführte Kühlöl rotierend geführt, bevor es über die zentrische Ablauföffnung in das Kurbelgehäuse gelangt. Hierdurch ist eine intensive Kühlung der inneren Wand des Kolbenbodens im Bereich des inneren Kühlraumes gewährleistet.

Weitere vorteilhafte Ausgestaltungen der Erfindung sind in den Unteransprüchen enthalten.

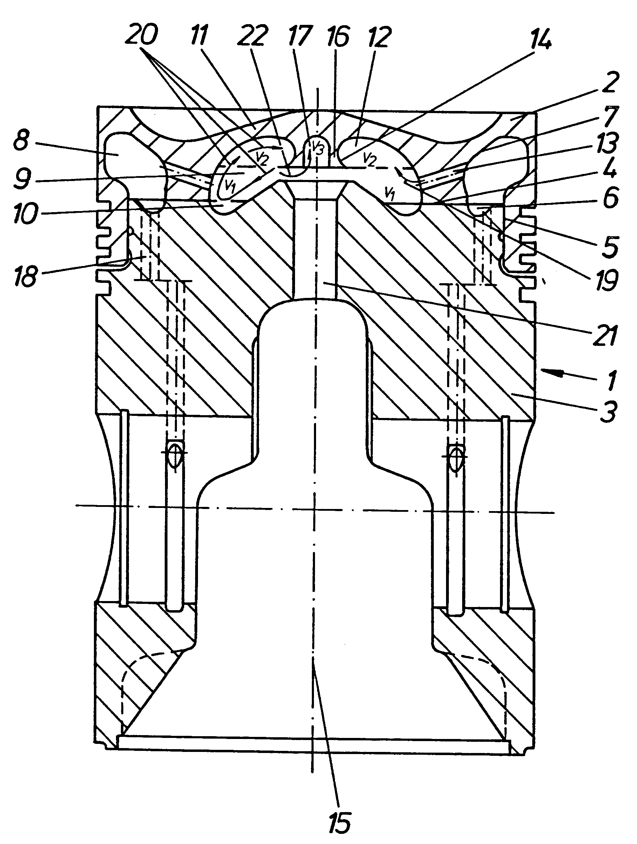

Ein Ausführungsbeispiel der Erfindung wird anhand der Zeichnung, die einen erfindungsgemäßen Kolben in Seitenansicht im Schnitt darstellt, näher erläutert.

Ein gebauter, ölgekühlter Kolben 1 besteht aus einem Kolbenoberteil 2 aus Stahl und einem Kolbenunterteil 3 aus einer Aluminium-Legierung. Beide Teile sind über vier auf dem Umfang verteilte Dehnschrauben (nicht gezeichnet) miteinander verbunden. Das Kolbenoberteil 2 stützt sich ringförmig 4 auf dem Kolbenunterteil 3 ab und wird durch entsprechende am Kolbenober- bzw. am Kolbenunterteil angebrachte Stufen 5 zentriert und durch eine Verdrehsicherung (nicht gezeichnet) fixiert. Eine Ausnehmung 6 im Kolbenunterteil 3 und eine Ausnehmung 7 im Kolbenoberteil 2 begrenzen zusammen einen äußeren ringförmigen Kühlraum 8. Ein zwischen dem Kolbenober- und Kolbenunterteil ausgebildeter innerer Kühlraum 9, der einerseits einen zum Kolbenschaft hin weisenden radial geschlossenen unteren Ringkanal 10 und andererseits einen zum Kolbenboden 11 hin weisenden radial geschlossenen oberen Ringkanal 12 aufweist, ist über Überleitbohrungen 13 mit dem äußeren, ringförmigen Kühlraum 8 verbunden. Der innere Kühlraum 9 wird im Kolbenoberteil 2 von einer konkaven Wand 14 des Kolbenbodens 11 begrenzt, die im Bereich der Kolbenachse 15 als eine Art in Richtung Kolbenunterteil 3 weisender Fortsatz 16 ausgebildet ist. Der nach unten hinterschnittartig erweiterte Fortsatz 16 weist mittig eine zum inneren Kühlraum 9 hin offene Ausnehmung 17 auf, die zur weiteren Kühlung des Kolbenbodens 11 dient.

Bei dem vorliegenden Ausführungsbeispiel wird das Kühlöl über Zulaufbohrungen 18 dem äußeren, ringförmigen Kühlraum 8 zugeführt. Von dort gelangt es über die Überleitbohrungen 13 in den inneren Kühlraum 9, wo es gemäß den Pfeilen 19 und 20 in rotierende Bewegungen versetzt wird, so daß eine intensive Kühlung der inneren Wand des Kolbenbodens 11 erfolgt. Die Rückleitung des Kühlöles in den Kurbelgehäuseraum erfolgt über eine im Kolbenunterteil 3 vorgesehene zentrische Ablauföffnung 21. Durch die Auf- und Abbewegung des Kolbens 1 gelangt gemäß Pfeil 22 ein Teil des Kühlöles auch in die Ausnehmung 17 des Fortsatzes 16, so daß hier ebenfalls eine gute Kühlung des Kolbenbodens 11 gewährleistet ist.

Um insgesamt einen optimalen Kühlöldurchfluß, insbesondere durch Shaker-Effekt im inneren Kühlraum 9 zu erreichen, sind die Volumina des inneren Kühlraumes 9 bei Fehlen der Ausnehmung 17 so gewählt, daß das durch V₁ in der Zeichnung gekennzeichnete Volumen des unteren Ringkanals 10 größer ist als das durch V₂ gekennzeichnete Volumen des oberen Ringkanals 12. Bei Vorhandensein der Ausnehmung 17, die ein Volumen V₃ beinhaltet, soll das mit V₁ gekennzeichnete Volumen gleich oder größer sein, als die Summe der Volumina von V₂ und V₃.

Durch eine derartige spezielle Formgebung der inneren Wand 14 des Kolbenbodens 11 zur Bildung des oberen Ringkanals 12 wird im Zusammenwirken mit dem entsprechend ausgebildeten gegenüberliegenden Teil des Kolbenunterteils 3, dem unteren Ringkanal 10, eine optimale Kühlung des Kolbens 1 in seinen thermisch hoch beanspruchten Zonen gewährleistet.

## Patentansprüche

1. Ölgekühlter Kolben (1) für Verbrennungsmotoren mit einem äußeren ringförmigen Kühlraum (8), der über Überleitbohrungen (13) mit einem inneren Kühlraum (9) in Verbindung steht, wobei der als Shaker wirkende innere Kühlraum (9) einerseits einen zum Kolbenschaft (3) hin weisenden radial geschlossenen unteren Ringkanal (10) und andererseits einen zum Kolbenboden (11) hin weisenden radial geschlossenen oberen Ringkanal (12) aufweist, mit einer für das von außen nach innen durchströmende Kühlöl dienenden zentralen Abflußöffnung (21) versehen ist, sowie
mit einem vom Kolbenboden (11) ausgehenden, mittig in den inneren Kühlraum (9) hineinragenden Fortsatz (16),
dadurch **gekennzeichnet,**
daß der Fortsatz (16) sich in seinem Querschnitt bezüglich Ebenen senkrecht zur Kolbenachse (15) in Richtung zum unteren Ringkanal (10) hin erweitert, um eine, zum oberen Ringkanal (12) hin weisende und diesen radial nach innen begrenzende, konkave Umlenk-Leitfläche (14) für das Kühlöl zu bilden.

2. Ölgekühlter Kolben nach Anspruch 1,
dadurch **gekennzeichnet,**
daß der Fortsatz (16) mit einer zum inneren Kühlraum (9) hin offenen Ausnehmung (17) versehen ist.

## Claims

1. An oil-cooled piston (1) for internal combustion engines, with an outer annular cooling space (8) communicating via transfer ports (13) with an inner cooling space (9), the inner cooling space (9) which acts as a shaker having on the one hand, directed towards the piston skirt (3) a radially closed lower annular passage (10) and on the other, directed towards the piston crown (11), a radially closed upper annular passage (12), and is provided with a central discharge orifice (21) which serves for the cooling fluid flowing through from the outside inwardly, and having, starting from the piston crown (11) an extension piece (16) which protrudes into the inner cooling space (9), characterised in that the extension piece (16) has a cross-section which widens out in respect of planes at right-angles to the piston axis (15) and in the direction of the lower annular passage (10) in order to form for the cooling fluid a concave deflecting surface (14) which is directed towards and radially inwardly defines the upper annular passage (12).

2. An oil-cooled piston according to Claim 1, characterised in that the extension piece (16) is provided with a recess (17) which is open towards the inner cooling space (9).

## Revendications

1. Piston (1) refroidi par huile pour moteurs à combustion interne, comprenant un compartiment de refroidissement extérieur (8) de forme annulaire qui communique par l'intermédiaire d'orifices de passage (13) avec un compartiment de refroidissement intérieur (9), le compartiment de refroidissement intérieur (9) qui agit comme shaker comportant d'une part un canal annulaire inférieur (10) fermé dans le sens radial et dirigé vers la tige de piston (3) et, d'autre part, un canal annulaire supérieur (12) fermé dans le sens radial et orienté vers le fond de piston (11), et présentant un orifice d'écoulement central (21) pour l'huile de refroidissement circulant de l'extérieur vers l'intérieur ainsi qu'un prolongement (16) qui part du fond de piston (11) et dépasse au centre dans le compartiment de refroidissement intérieur (9), **caractérisé en ce** que la section transversale du prolongement (16) s'élargit, par rapport à des plans perpendiculaires à l'axe d(15) du piston, en direction du canal annulaire inférieur (10) pour former pour l'huile de refroidissement une surface de déviation (14) concave qui est dirigée vers le canal annulaire supérieur (12) qu'elle délimite intérieurement dans le sens radial.

2. Piston refroidi par huile selon la revendication 1, caractérisé en ce que le prolongement (16) est muni d'un évidement (17) ouvert en direction du compartiment de refroidissement intérieur (9)
